# EUROPÄISCHE PATENTANMELDUNG

(11) **EP 4 485 003 A1**
(43) Veröffentlichungstag der Anmeldung: **01.01.2025**
(21) Anmeldenummer: 23199431.0
(22) Anmeldetag: 25.09.2023
(51) Int. Cl.: G01S 7/497, G01S 17/89

(54) **ECHTZEITSIMULATION EINER LASERSTRAHLABTASTUNG EINES KOMPLEXES VON KLEINOBJEKTEN**

(30) Priorität: 26.06.2023 DE 102023116778; 06.07.2023 DE 102023117887
(71) Anmelder: dSPACE GmbH, 33102 Paderborn (DE)
(72) Erfinder: Brodehl, Christoph, 33102 Paderborn (DE); Esch, Christian, 33102 Paderborn (DE); Kühn, Erik, 33102 Paderborn (DE)

(57) **Zusammenfassung**

Eine Vorrichtung zur Echtzeitsimulation einer Laserstrahlabtastung eines Komplexes von Kleinobjekten, beispielsweise eines Getreidefeldes, umfasst eine virtuelle Umgebung mit einem monolithischen 3D-Modell des Komplexes von Kleinobjekten und außerdem eine Sensorsimulation zur Simulation eines Sensors zur Abstandsmessung mittels eines Laserstrahls. Die Sensorsimulation umfasst eine Raycasting-Routine zur Simulation eines Laserstrahls und eine Verrauschungsroutine. Die Verrauschungsroutine ist ausgestaltet, einen Einfallswinkel des Laserstrahls auf einer Oberfläche des 3D-Modells zu ermitteln und aus einer Datenbank, umfassend eine Vielzahl von Intensitätsverteilungen, eine dem ermittelten Einfallswinkel zugeordnete Intensitätsverteilung auszuwählen. Aus jeder Intensitätsverteilung ist ein Intensitätsanteil einer Reflexion des Laserstrahls in Abhängigkeit von einer Eindringtiefe des Laserstrahls in den Komplex von Kleinobjekten auslesbar. Die Verrauschungsroutine ist ausgestaltet, unter Berücksichtigung der ausgewählten Intensitätsverteilung eine verrauschte Entfernungsmessung zu berechnen, um eine Vielzahl von Reflexionen des Laserstrahls an einer Vielzahl von Kleinobjekten, beispielsweise Ähren des Getreidefeldes, zu simulieren.

## Beschreibung

LIDAR-Sensoren (LIDAR = Light Detection and Ranging) sind Sensoren zur Abtastung der Umgebung mittels eines kurzwelligen Lichtsignals, für gewöhnlich im nahinfraroten Bereich. Durch Detektion der Reflexion des Lichtsignals und durch Vermessung von dessen Umlaufzeit kann ein LIDAR-Sensor ein dreidimensionales Abbild seiner Umgebung in hoher Auflösung erstellen. Diese Eigenschaft macht LIDARs interessant für den Einsatz in hochautomatisierten Fahrzeugen, die sich ohne menschliche Steuerung in einer unbekannten Umgebung fortbewegen können und dafür ihre Umwelt wahrnehmen müssen. Viele LIDAR-Sensoren verwenden zur Abtastung der Umgebung einen gerichteten Laserstrahl, der in hoher Frequenz in wechselnde Raumrichtungen abgestrahlt wird, um anhand der Reflexionen eine die Umgebung repräsentierende Punktwolke zu berechnen.

Seit vielen Jahren ist es üblich, sicherheitskritische elektronische Steuersysteme vor ihrer Serienfertigung in einer virtuellen Umgebung zu testen. Je nach Ausgestaltung des Prüflings sind derartige Testverfahren beispielsweise als Software in the Loop (SIL), Hardware in the Loop (HIL) oder Vehicle in the Loop (VIL) bekannt. Die virtuelle Umgebung wird in Echtzeit auf einem Simulationscomputer berechnet und umfasst eine Sensorsimulation, die zur virtuellen Umgebung passende Sensorsignale berechnet und in den Prüfling, also das unter Test stehende Steuersystem, einspeist, um zu prüfen, ob das Steuersystem die Sensorsignale korrekt auswertet und angemessen auf sie reagiert.

Für den Test von LIDAR-Systemen sind auf dem Markt entsprechende Sensorsimulationen erhältlich, die die Funktion eines LIDARs imitieren und die Sensorsignale eines gegebenen LIDAR-Sensors synthetisch erzeugen können. Insbesondere für die Simulation eines mit einem gerichteten Laserstrahl arbeitenden LIDAR-Sensors bietet es sich an, hierfür auf ein Raycasting-Verfahren zurückzugreifen, da dieses gewissermaßen der natürlichen Arbeitsweise des tatsächlichen Sensors entspricht. Der Laserstrahl kann dabei in der virtuellen Umgebung durch eine einzige von dem simulierten Sensor ausgehende Gerade in der virtuellen Umgebung modelliert werden, um einen Auftreffpunkt des Laserstrahls auf einer Oberfläche eines virtuellen Objekts in der virtuellen Umgebung zu berechnen. Der Auftreffpunkt wird dann als Quelle einer simulierten Reflexion des Laserstrahls modelliert.

Diese Methode kann zufriedenstellende Ergebnisse liefern, solange der Laserstrahl als idealer geometrischer Strahl ohne Strahlquerschnitt approximierbar ist. Das ist im Allgemeinen der Fall, wenn der Laserstrahl mit Objekten interagiert, deren Abmessungen, zumindest in erster Näherung, den Strahlquerschnitt um wenigstens eine Größenordnung überschreiten. Beispiele für derartige Objekte sind Gebäude, Beschilderung, Fahrzeuge, Personen und Bodenflächen. Problematisch wird die Methode, wenn die virtuelle Umgebung Komplexe von Kleinobjekten umfassen soll. Ein "Komplex von Kleinobjekten" meint eine enge lokale Häufung von Objekten, von denen jedes in wenigstens einer Raumrichtung von ähnlicher oder geringerer Größenordnung als der Strahldurchmesser des Laserstrahls ist. Insbesondere Vegetationselemente bilden häufig derartige Komplexe aus. So ist beispielsweise ein Getreidefeld ein Komplex von Ähren, eine Wiese ist ein Komplex von Gräsern (und eventuell weiterer Pflanzen), und belaubte Pflanzen, Gebüsche oder Nadelbäume sind Komplexe von Blättern. Bei einer Kollision des Laserstrahl mit einem derartigen Kleinobjekt ist der Strahlquerschnitt nicht vernachlässigbar. Im Allgemeinen wird das Kleinobjekt nur einen Anteil der Strahlintensität reflektieren, während ein anderer Anteil des Laserstrahls das Kleinobjekt passiert. Ein Laserstrahl, der auf einen Komplex von Kleinobjekten trifft, wird also in den Komplex eindringen und, verursacht durch mehrfache Kollisionen mit unterschiedlichen Kleinobjekten, mit zunehmender Eindringtiefe an Intensität verlieren. Der Lidar-sensor registriert in diesem Fall statt einer einzigen, wohlabgegrenzten Reflexion ein in der Zeit verzerrtes Reflexionssignal, zusammengesetzt aus einer Vielzahl von Reflexionen mit unterschiedlicher Umlaufzeit an unterschiedlichen Kleinobjekten.

Um einen derartigen Reflexionsvorgang durch klassisches Raycasting oder Raytracing physikalisch plausibel zu simulieren, wäre ein hochaufgelöstes 3D-Modell, das die einzelnen Kleinobjekte detailliert modelliert, in Kombination mit einem viele Tausend Strahlen berücksichtigenden Raycasting-Modell zur hinreichenden Auflösung eines ausgedehnten Laserstrahls vonnöten. Eine solche Simulation ist in harter Echtzeit und hinreichend schnell nicht mit vertretbarem Aufwand durchführbar.

Aus der Computergrafik ist es grundsätzlich bekannt, für eine glaubhafte und in Realzeit ablaufende Simulation einer verzerrten Lichtreflexion auf stochastische Methoden zurückzugreifen, wenn eine physikalisch korrekte Simulation auf Basis von Raycasting oder Raytracing zu rechenaufwendig ist. Beispielhaft beschreibt der Fachaufsatz "Simulation of Realistic Water on 3D Game Scene" (Xiang Xu, Kun Zou, Procedia Engineering 29, 2012) ein Verfahren für eine Echtzeitsimulation einer Reflexion auf einer gekräuselten Wasseroberfläche.

Ein weiteres Beispiel aus dem Fachgebiet der Sensorsimulation findet sich in dem Fachaufsatz "A 3-D Model for Millimeter-Wave Propagation Through Vegetation Media Using Ray-Tracing" (Nuno R. Leonor et al., IEEE Transactions on Antennas and Propagation 67(6), 2019). Der Aufsatz beschreibt das Problem der plausiblen Simulation eines Radarechos eines Vegetationselements vor dem Hintergrund der durch die Blätter gebildeten Feinstruktur. Der vorgeschlagene Lösungsansatz auf Basis ortsfester punktförmiger Streuzentren ist aber für die Simulation eines mit einem gerichteten und stark kollimierten Laserstrahl arbeitenden LIDARs nicht anwendbar.

Eine allgemeine Einführung in den Stand der Technik der Simulation bildgebender Fahrzeugsensoren zur testweisen Stimulation von Steuersystemen findet sich in dem Fachaufsatz "Development of Full Speed Range ACC with SiVIC, a virtual platform for ADAS Prototyping, Test and Evaluation" (Dominique Gruyer et al., IEEE Intelligent Vehicles Symposium, 2013)

Vor diesem Hintergrund besteht die Aufgabe der Erfindung darin, die Computersimulation einer Laserstrahlabtastung eines Komplexes von Kleinobjekten zu beschleunigen, insbesondere hinreichend zu beschleunigen, um die Simulation in harter Echtzeit in der Arbeitsgeschwindigkeit eines Sensors zur Abstandsmessung mittels eines Laserstrahls zu ermöglichen.

Zur Lösung der Aufgabe wird eine Vorrichtung zur Echtzeitsimulation einer Laserstrahlabtastung eines Komplexes von Kleinobjekten vorgeschlagen. Die Vorrichtung umfasst eine virtuelle Umgebung und als Teil der virtuellen Umgebung ein monolithisches 3D-Modell des Komplexes von Kleinobjekten.

Das monolithische 3D-Modell ist vorteilhaft so ausgestaltet, dass es keine Struktur in der Größenordnung der Kleinobjekte aufweist und insbesondere keine Modellierung einzelner Kleinobjekte umfasst. Besonders vorteilhaft modelliert das 3D-Modell des Komplexes den Komplex allein durch eine den Komplex einhüllende Oberfläche. Beispielsweise kann ein Getreidefeld, in der physischen Welt ein Komplex aus Ähren, allein durch eine quaderförmige, das Getreidefeld einhüllende Bounding Box modelliert sein. Die Bounding Box kann natürlich zur Visualisierung mit einer zu einem Getreidefeld passenden Textur versehen sein, umfasst aber keine dreidimensionalen Strukturen zur Nachbildung einzelner Ähren.

Die Vorrichtung umfasst weiterhin eine Sensorsimulation, ausgestaltet zur Simulation eines Sensors zur Abstandsmessung mittels eines Laserstrahls. Die Sensorsimulation umfasst eine Raycasting-Routine, die eingerichtet ist, einen Auftreffpunkt eines von dem Sensor ausgehenden Laserstrahls mit einer Oberfläche in der virtuellen Umgebung zu berechnen, einen euklidischen Abstand des Sensors vom Auftreffpunkt zu berechnen und basierend auf dem euklidischen Abstand eine von dem Sensor durchgeführte Entfernungsmessung zu simulieren, insbesondere synthetische Sensorsignale zu erzeugen. Die synthetischen Sensorsignale können in ein unter Test stehendes Steuersystem zur Auswertung der Sensorsignale eingespeist werden, beispielsweise ein LIDAR-System, um dem Steuersystem testweise die Anwesenheit eines Sensors vorzutäuschen.

Weiterhin Teil der Sensorsimulation ist eine Datenbank, in der eine Vielzahl von Intensitätsverteilungen hinterlegt ist. Jede Intensitätsverteilung aus der Vielzahl von Intensitätsverteilungen ist einem Einfallswinkel des Laserstrahls zugeordnet. Die Ausgestaltung der Intensitätsverteilungen ist derart, dass aus jeder Intensitätsverteilung aus der Vielzahl von Intensitätsverteilungen ein Intensitätsanteil einer Reflexion des Laserstrahl in Abhängigkeit von einer Eindringtiefe des Laserstrahl in den Komplex von Kleinobjekten auslesbar ist.

Weiterhin umfasst die Sensorsimulation eine Verrauschungsroutine, die ausgestaltet ist, einen Einfallswinkel des Laserstrahl auf einer Oberfläche des 3D-Modells zu ermitteln und aus der Vielzahl von Intensitätsverteilungen eine dem ermittelten Einfallswinkel zugeordnete Intensitätsverteilung auszuwählen. Unter Berücksichtigung des euklidischen Abstands und der ausgewählten Intensitätsverteilung berechnet die Verrauschungsroutine eine verrauschte Entfernungsmessung. Mit anderen Worten greift die Verrauschungsroutine auf die in der Intensitätsverteilung hinterlegten Daten zu, um anhand der Daten eine Vielzahl von Reflexionen des in den Komplex eindringenden Laserstrahls an einer Vielzahl von Kleinobjekten in dem Komplex mit unterschiedlichen Umlaufzeiten zu simulieren.

Die Sensorsimulation ist ausgestaltet, eine Kollision des simulierten Laserstrahls mit einer Oberfläche des 3D-Modells des Komplexes von Kleinobjekten zu registrieren und in dem Fall, dass der Auftreffpunkt des Laserstrahls auf einer Oberfläche des 3D-Modells liegt, die Verrauschungsroutine aufzurufen.

Die Anzahl der möglichen Einfallswinkel des Laserstrahls ist unendlich. Folglich ist es natürlich nicht möglich, jedem möglichen Einfallswinkel eine Intensitätsverteilung zuzuordnen. Das Erfindungsmerkmal "aus der Vielzahl von Intensitätsverteilungen eine dem ermittelten Einfallswinkel zugeordnete Intensitätsverteilung auszuwählen" ist deshalb so zu verstehen, dass aus der endlichen Anzahl in der Datenbank hinterlegter Intensitätsverteilungen eine ausgewählt wird, deren zugeordneter Einfallswinkel dem ermittelten Einfallswinkel hinreichend ähnlich, insbesondere möglichst ähnlich, ist. In einer Ausbaustufe der Erfindung kann auch durch eine Interpolation der ausgewählten Intensitätsverteilung zu einer weiteren, in der Datenbank benachbarten Intensitätsverteilung eine Anpassung der ausgewählten Intensitätsverteilung an den ermittelten Einfallswinkel vorgenommen werden.

Die Berechnung der verrauschten Entfernungsmessung durch die Sensorsimulation anhand der Intensitätsverteilungen kann unterschiedlich ausgestaltet sein. In einer einfachen Ausgestaltung der Erfindung werden die Intensitätsanteile der Reflexionen unterschiedlicher Eindringtiefen einfach aus den Intensitätsverteilungen ausgelesen und unmittelbar verwendet. Das von dem simulierten Sensor detektierte Antwortsignal setzt sich dann also aus einer Vielzahl von Reflexionen zusammen, wobei die räumliche Entfernung jeder einzelnen Reflexion sich aus der Summe des ermittelten euklidischen Abstands und ihrer in der Intensitätsverteilung hinterlegten Eindringtiefe ist.

Ein Nachteil dieser Ausgestaltung ist, dass sie zu einer unrealistischen Sensorsimulation führen kann, weil Antwortsignale sich wiederholen, wenn ihr Einfallswinkel übereinstimmt. Besonders problematisch ist dieser Nachteil in simulierten Szenarien, in denen der Einfallswinkel des Laserstrahl unveränderlich ist. Ein Beispiel ist eine Simulation einer hochautomatisierten Landmaschine, die den Laserstrahl eines LIDAR-Systems in einer Kreisbahn über ein Getreidefeld streichen lässt, ohne dabei den Elevationswinkel zu verändern. Wenn das 3D-Modell des Getreidefelds als Bounding Box modelliert ist, liegt in diesem Fall ein konstanter Einfallswinkel vor, sodass der simulierte Sensor mit jeder Abtastung ein exakt gleiches Antwortsignal detektieren würde.

In einer vorteilhaften Ausgestaltung ist deshalb die Verrauschungsroutine ausgestaltet, bei der Verrechnung der verrauschten Entfernungsmessung einen Zufallszahlengenerator anzuwenden, um die verrauschten Entfernungsmessungen gegeneinander zu variieren. Besonders vorteilhaft ist die Verrauschungsroutine ausgestaltet, die Intensitätsverteilungen als Wahrscheinlichkeitsverteilungen zu interpretieren, aus denen für eine einzelne Reflexion des Laserstrahls Wahrscheinlichkeiten für unterschiedliche Eindringtiefen in den Komplex auslesbar sind, und auf Basis der Wahrscheinlichkeitsverteilung die verrauschte Entfernungsmessung zu berechnen. Beispielhaft kann die Verrauschungsroutine ausgestaltet sein, eine fest oder variabel vorgegebene Anzahl von Reflexionen des Laserstrahls zu simulieren. Die Verrauschungsroutine greift dann auf die dem Einfallswinkel zugeordnete Intensitätsverteilung zu und konfiguriert einen Zufallszahlengenerator derart, dass der Zufallszahlengenerator Zufallszahlen generiert, deren statistische Verteilung der Vorgabe der Intensitätsverteilung entspricht. Den konfigurierten Zufallszahlengenerator verwendet die Verrauschungsroutine anschließend, um jeder Reflexion aus der vorgegebenen Anzahl von Reflexionen eine Eindringtiefe in den Komplex zuzuordnen und simuliert eine verrauschte Entfernungsmessung, die sich aus den derart berechneten Reflexionen des Laserstrahls ergibt.

Die Erstellung der Intensitätsverteilungen kann auf in der Realität durchgeführten Messungen beruhen, erfolgt aber vorteilhaft anhand eines feingranularen 3D-Modells des Komplexes von Kleinobjekten, das einzelne Kleinobjekte auflöst, sodass das feingranulare 3D-Modell eine Ortsberechnung von Auftreffpunkten eines in den Komplex eindringenden Laserstrahl anhand von Raycasting ermöglicht. An dem feingranularen 3D-Modell wird wiederholt ein hochaufgelöstes Raycasting eines unter unterschiedlichen Einfallswinkeln auf den Komplex treffenden Laserstrahls durchgeführt. Der Laserstrahl wird durch eine Vielzahl von Strahlen modelliert, die in ihrer Gesamtheit einen aufgefächerten Laserstrahl mit einem ausgedehnten, also von Null verschiedenen Strahldurchmesser simulieren.

Für jeden Einfallswinkel, dem eine Intensitätsverteilung zugeordnet werden soll, wird ein entsprechender Raycast durchgeführt und anhand des Raycasts die Auftreffpunkte der Vielzahl von Strahlen auf Oberflächen von Kleinobjekten in dem feingranularen 3D-Modell berechnet. Die Erstellung jeder Intensitätsverteilung erfolgt dann durch Zählung der Auftreffpunkte in Abhängigkeit der Eindringtiefe der Strahlen in das feingranulare 3D-Modell. Mit anderen Worten sind die Intensitätsverteilungen derart ausgestaltet, das auf ihrer Abszisse Intervalle von Eindringtiefen aufgetragen sind und auf ihrer Ordinate eine Größe, die charakteristisch für die Anzahl der Strahlen des jeweiligen Raycasts ist, die innerhalb einer in dem jeweiligen Intervall liegenden Eindringtiefe auf eine Oberfläche eines Kleinobjekts getroffen sind und an dem Auftreffpunkt eine Reflexion verursacht haben.

Im einfachsten Fall, wenn für alle Reflexionen eine einheitliche Helligkeit angenommen wird, ist die einer Eindringtiefe entsprechende Intensität der Reflexion des Laserstrahl proportional zur jeweiligen Anzahl von Auftreffpunkten. In einer Ausbaustufe der Erfindung ist es aber auch möglich, jeder Reflexion eine individuelle Helligkeit zuzuordnen, beispielsweise unter Berücksichtigung von Materialeigenschaften oder der Größe bzw. Angriffsfläche der Oberfläche, auf der ein Auftreffpunkt liegt.

In einer Ausbaustufe der Erfindung ist jede Intensitätsverteilung aus der Vielzahl von Intensitätsverteilungen neben dem Einfallswinkel zumindest noch einem weiteren Parameter zugeordnet. Die weiteren Parameter bezeichnen dabei weitere physikalische Größen, die die Reflexion des Laserstrahls beeinflussen und können beispielsweise die Art der Vegetation sein, ein Aufweitungswinkel des Laserstrahls, eine Pflanzdichte, ein Reihenabstand, eine Höhe der Vegetation oder ein Reifegrad. Die Verrauschungsroutine ist dabei ausgestaltet, aus der Vielzahl von Intensitätsverteilungen eine dem ermittelten Einfallswinkel und dem mindestens einen weiteren Parameter zugeordnete Intensitätsverteilung auszuwählen.

Die Erfindung wird nachträglich anhand der Zeichnungen näher erläutert. Die Zeichnungen sind stark schematisiert. Geometrische Abmessungen und Anzahlen von Elementen sind teilweise im Interesse einer besseren Visualisierung unrealistisch dargestellt. Es zeigen
- Figur 1: eine schematische Illustration einer Erstellung einer Intensitätsverteilung anhand eines feingranularen 3D-Modells;
- Figur 2: die Arbeitsweise der Sensorsimulation zur Simulation einer Vielzahl von Reflexionen anhand der Intensitätsverteilung.

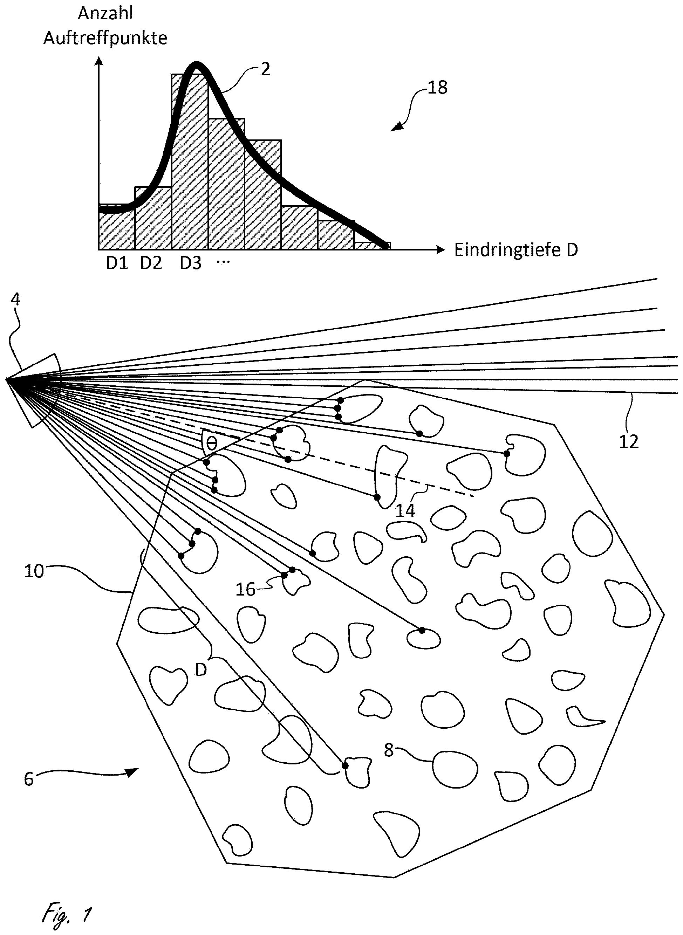

Die Abbildung der Figur 1 illustriert schematisch die Erstellung einer einem Einfallswinkel θ zugeordneten Intensitätsverteilung 2. Eine auf einer computerbasierten Simulationsvorrichtung laufende virtuelle Umgebung zum Testen eines LIDAR-Systems umfasst einen simulierten LIDAR-Sensor 4 und ein feingranulares 3D-Modell 6 eines Komplexes von Kleinobjekten 8. Das feingranulare 3D-Modell 6 löst einzelne Kleinobjekte 8 auf, umfasst also eine detaillierte 3D-Modellierung der einzelnen Kleinobjekte 8, und umfasst eine den Komplex einhüllende Oberfläche 10, die eine äußere Grenze des Komplexes definiert.

Eine Sensorsimulation zur Simulation des LIDAR-Sensors umfasst eine Raycasting-Routine. Die Raycasting-Routine modelliert den Laserstrahl hochaufgelöst durch eine Vielzahl von Strahlen 12, die in ihrer Gesamtheit eine hochaufgelöste Simulation eines aufgefächerten Laserstrahls mit einem ausgedehnten Strahldurchmesser ergeben. Jeder Strahl 12 ist eine durch den dreidimensionalen Raum der virtuellen Umgebung führende Gerade. Die Strahlen 12 gehen fächerförmig von einem gemeinsamen Ursprung aus, der ortsgleich mit den Koordinaten des simulierten LIDAR-Sensors 4 in der virtuellen Umgebung ist. Eine optische Achse 14 des Laserstrahls liegt in einem Einfallswinkel θ an der einhüllenden Oberfläche 10 des Komplexes 6 an, und die Sensorsimulation ist ausgestaltet, den Einfallswinkel θ zu ermitteln. Für jeden Stahl 12 überprüft die Raycasting-Routine die Existenz eines Auftreffpunkts 16 auf einer Oberfläche in der virtuellen Umgebung.

Jedem Strahl 12, dessen Auftreffpunkt 16 auf einer Oberfläche eines Kleinobjektes 8 liegt, ist eine Eindringtiefe D zugeordnet, definiert als die Entfernung des jeweiligen Auftreffpunktes 16 vom Durchstoßpunkt des jeweils zugehörigen Strahls 12 auf der einhüllenden Oberfläche 10.

Zur Erstellung der Intensitätsverteilung 2 werden nach einmaliger Berechnung aller Auftreffpunkte 16 alle innerhalb des Komplexes liegenden, d.h. alle von der Oberfläche 10 eingehüllten Auftreffpunkte 16 ermittelt und für jeden von der Oberfläche 10 eingehüllten Auftreffpunkt 16 die Eindringtiefe D berechnet. Die Verteilung der Eindringtiefen D wird in einem Histogramm 18 aufgetragen. Das fertig erstellte Histogramm 18 trägt auf seiner Abszisse eine Anzahl von Eindringtiefenintervallen D1, D2, D3, ..., DN auf und auf seiner Ordinate die Anzahl von Auftreffpunkten 16, deren Eindringtiefe D innerhalb des jeweiligen Intervalls liegt. Durch Interpolation der in dem Histogramm 18 aufgetragenen Anzahlen wird das Histogramm 18 in eine Intensitätsverteilung 2 konvertiert und die Intensitätsverteilung 2 in einer Datenbank 20 derart abgespeichert, dass die Intensitätsverteilung 2 in der Datenbank 20 dem Einfallswinkel θ eindeutig zugeordnet ist. Der Vorgang wird vielfach mit unterschiedlichen Einfallswinkeln θ wiederholt, um die Datenbank 20 mit einer Vielzahl von Intensitätsverteilungen 2 aufzufüllen, die jeweils unterschiedlichen Einfallswinkeln θ zugeordnet sind und den Parameterraum möglicher Einfallswinkel θ in hinreichender Dichte rastern. Der von den Intensitätsverteilungen 2 zu rasternde Parameterraum kann neben dem Einfallswinkel θ weitere die Reflexion des Laserstrahls beeinflussende Parameter umfassen, die bei der Erstellung der Intensitätsverteilungen 2 entsprechend variiert und denen die Intensitätsverteilungen 2 in der Datenbank 20 zugeordnet werden.

In einer dreidimensionalen virtuellen Umgebung ist θ ein Raumwinkel, der sich aus einem Azimutalwinkel θ_{H} und einem Elevationswinkel θ_{V} zusammensetzt, und die Intensitätsverteilung 2 ist in der Datenbank 20 entsprechend zuzuordnen. Bei der vorhergehend beschriebenen Erstellung der Intensitätsverteilungen 2 wurde vereinfachend davon ausgegangen, dass jeder Auftreffpunkt 16 einen vorgegebenen und für alle Auftreffpunkte 16 gleichen Beitrag zur zeitlich verteilten Intensität des von dem simulierten Sensor 4 gemessenen Antwortsignals leistet. Natürlich ist es aber ebenso möglich, jedem Auftreffpunkt 16 eine individuelle Intensität zuzuordnen. In diesem Fall sind bei der Erstellung des Histogramms 18 die individuellen Auftreffpunkte 16 entsprechend der ihnen jeweils zugeordneten Intensität unterschiedlich zu gewichten.

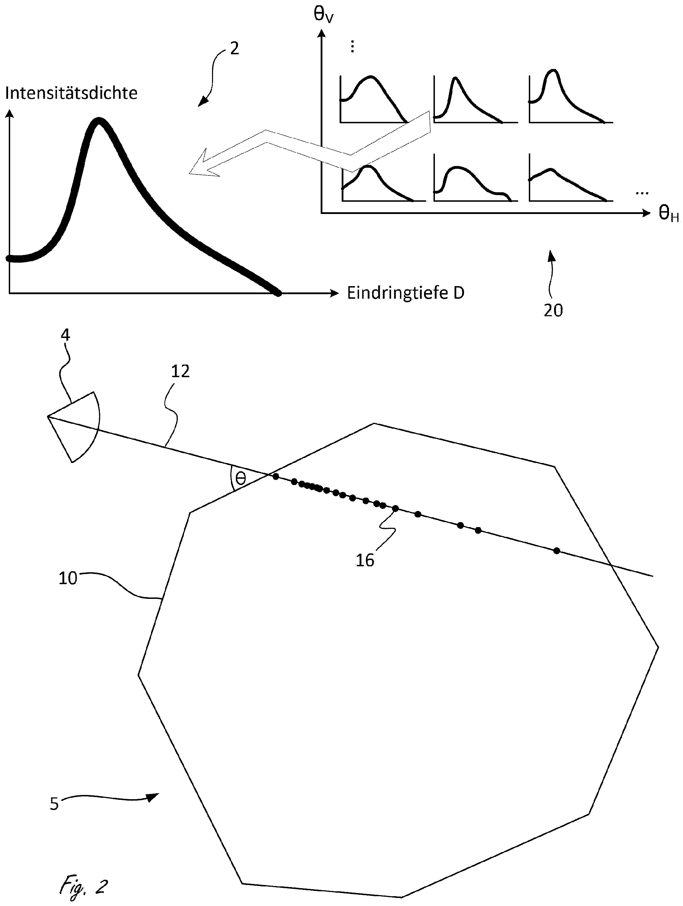

Die Abbildung der Figur 2 illustriert die Arbeitsweise der Sensorsimulation während einer laufenden Echtzeitsimulation nach Fertigstellung der Datenbank 20. Die Raycasting-Routine der Sensorsimulation berechnet statt eines hochaufgelösten Strahlenbündels nur noch einen einzigen, von dem simulierten Sensor 4 ausgehenden Strahl 12, der den Laserstrahl des LIDAR-Sensors repräsentiert, aber keinen Strahldurchmesser des Laserstrahls berücksichtigt. Das feingranulare 3D-Modell 6 des Komplexes von Kleinobjekten 8 ist durch ein einfaches monolithisches 3D-Modell 5 ersetzt, das nur noch die einhüllende Oberfläche 10 umfasst. Der Komplex von Kleinobjekten 8 ist während der Echtzeitsimulation also durch einen Polyeder modelliert, beispielsweise eine Bounding Box, und löst keine Kleinobjekte 8 auf.

Die Sensorsimulation simuliert die Arbeitsweise des LIDAR-Sensors, indem sie während der Simulation periodisch die Raycasting-Routine aufruft und Strahlen 12 in wechselnde Raumrichtungen in der virtuellen Umgebung legen lässt, um beispielsweise eine Abtastung der Umgebung durch einen kreisenden Laserstrahl zu simulieren. Jedes Mal, wenn der Auftreffpunkt des Strahls 12 auf der einhüllenden Oberfläche 10 liegt, ruft die Sensorsimulation die Verrauschungsroutine auf. Die Verrauschungsroutine ermittelt den Einfallswinkel θ des Strahls 12 auf der einhüllenden Oberfläche 10 und ruft aus der Datenbank 20 die passende Intensitätsverteilung 2 auf, die bezüglich ihres Azimutalwinkels θ_{H} und ihres Elevationswinkels θ_{V} (und weiterer Parameter, denen die Intensitätsverteilungen 2 in der Datenbank 20 zugeordnet sind) dem ermittelten Einfallswinkel θ am ähnlichsten ist. Die Verrauschungsroutine führt anhand einer Interpolation der aufgerufenen Intensitätsverteilung 2 mit zumindest einer in der Datenbank benachbarten Intensitätsverteilung eine Korrektur der aufgerufenen Intensitätsverteilung 2 durch, um die aufgerufene Intensitätsverteilung 2 an den ermittelten Einfallswinkel θ anzupassen. Die Verrauschungsroutine interpretiert die derart korrigierte Intensitätsverteilung 2 als eine Wahrscheinlichkeitsverteilung für die Eindringtiefe D einer einzelnen gegebenen Reflexion eines Laserstrahls, der unter dem Einfallswinkel θ auf den Komplex von Kleinobjekten 8 trifft. Die Verrauschungsroutine weist einer vorgegebenen Anzahl zu simulierender Reflexionen des Laserstrahls jeweils eine Eindringtiefe D zu, indem sie für jede zu simulierende Reflexion einen Zufallszahlengenerator aufruft, der der jeweiligen Reflexion unter Anwendung der Intensitätsverteilung 2 eine Eindringtiefe zuweist, sodass sich für die Anzahl von Reflexionen eine der Intensitätsverteilung 2 entsprechende statistische Verteilung der Eindringtiefen D ergibt.

Die virtuelle Umgebung, in der der simulierte Sensor 4 operiert, umfasst zwei Klassen von 3D-Objekten, und die Sensorsimulation ist ausgestaltet, zwischen beiden Klassen zu unterscheiden. Eine erste Klasse beschreibt kompakte Objekte, in die ein Laserstrahl nicht eindringen kann. Beispiele sind Gebäude, Fahrzeuge, Straßenschilder und Personen. Wenn der Auftreffpunkt des Strahls 12 auf einem Objekt der ersten Klasse liegt, ruft die Sensorsimulation die Verrauschungsroutine nicht auf, sondern simuliert die Entfernungsmessung lediglich anhand des euklidischen Abstands vom simulierten Sensor 4 zum Auftreffpunkt und verwendet den euklidischen Abstand (möglicherweise geringfügig verfälscht, um eine Messungenauigkeit des Sensors 4 zu simulieren) als gemessene Entfernung des simulierten Sensors 4.

Eine zweite Klasse beschreibt von einem Laserstrahl durchdringbare Komplexe von Kleinobjekten. Wenn der Auftreffpunkt 16 auf einem Objekt der zweiten Klasse liegt, führt die Sensorsimulation auf gleiche Weise wie zuvor beschrieben eine Berechnung des euklidischen Abstands des Auftreffpunkts 16 vom Sensor 4 durch, aber verwendet den euklidischen Abstand nicht als gemessene Entfernung. Stattdessen ruft die Sensorsimulation die Verrauschungsroutine auf, um wie zuvor beschrieben eine Vielzahl von Auftreffpunkten mit unterschiedlichen Eindringtiefen D zu berechnen. Auf Basis der Vielzahl von Eindringtiefen berechnet die Verrauschungsroutine eine verrauschte Entfernungsmessung, die sich aus einer Vielzahl von Entfernungsmessungen, entsprechend einer Vielzahl von Reflexionen des Laserstrahl an unterschiedlichen Kleinobjekten 8, zusammensetzt. Für jeden der von der Verrauschungsroutine anhand des Zufallszahlengenerators berechneten Auftreffpunkte 16 wird eine eigene gemessene Entfernung berechnet, die sich jeweils aus der Summe des euklidischen Abstands und der individuellen Eindringtiefe D des jeweiligen Auftreffpunktes 16 ergibt. Aus der Gesamtheit aller auf diese Art berechneten Entfernungsmessungen erstellt die Verrauschungsroutine die verrauschte Entfernungsmessung. Bei der Berechnung der verrauschten Entfernungsmessung berücksichtigt die Verrauschungsfunktion insbesondere auch die unterschiedlichen Umlaufzeiten, die sich aus den unterschiedlichen Eindringtiefen D ergeben, und simuliert ein in der Zeit verzerrtes Antwortsignal des Laserstrahls.

Die Verrauschungroutine gibt die verrauschte Entfernungsmessung an die Sensorsimulation aus. Die Sensorsimulation berechnet auf Basis der verrauschten Entfernungsmessung ein synthetisches Sensorsignal, das ein reales Sensorsignal nachbildet, wie es ein physischer LIDAR-Sensor auf Basis einer entsprechend verrauschten Entfernungsmessung ausgeben würde, und gibt das synthetische Sensorsignal an eine Schnittstelle der Simulationsvorrichtung aus. An die Schnittstelle ist ein unter Test stehendes Steuersystem anschließbar, das für die Verarbeitung der Sensorsignale ausgestaltet ist.

Die Erfindung ermöglicht es, unter Anwendung eines einfachen, nur einen einzigen Strahl 12 verwendenden Raycasting-Verfahrens und eines einfachen, nur eine einhüllende Fläche 10 umfassenden 3D-Modells 5 eine vielfache Reflexion eines Laserstrahls an einem Komplex von Kleinobjekten realitätsnah zu simulieren. Die Simulation ist durch diese Vereinfachung mit vertretbarem Aufwand in harter Echtzeit in der Arbeitsgeschwindigkeit eines physischen LIDAR-Sensors durchführbar und folglich für den Test und die Entwicklung eines Steuersystems verwendbar.

## Patentansprüche

1. Vorrichtung zur Echtzeitsimulation einer Laserstrahlabtastung eines Komplexes von Kleinobjekten (8),
mit einer virtuellen Umgebung, die ein monolithisches 3D-Modell (5) des Komplexes von Kleinobjekten (8) umfasst;
mit einer Sensorsimulation, ausgestaltet zur Simulation eines Sensors zur Abstandsmessung mittels eines Laserstrahls, die Sensorsimulation umfassend:
- eine Raycasting-Routine, die eingerichtet ist, einen Auftreffpunkt (16) eines von dem Sensor ausgehenden Laserstrahls auf einer Oberfläche in der virtuellen Umgebung zu berechnen und basierend auf einer Ermittlung eines euklidischen Abstands des Sensors vom Auftreffpunkt eine von dem Sensor durchgeführte Entfernungsmessung zu simulieren;
- eine Datenbank (20), umfassend eine Vielzahl von Intensitätsverteilungen (2), wobei jede Intensitätsverteilung (2) aus der Vielzahl von Intensitätsverteilungen (2) einem Einfallswinkel θ des Laserstrahls zugeordnet ist und aus jeder Intensitätsverteilung (2) aus der Vielzahl von Intensitätsverteilungen (2) ein Intensitätsanteil einer Reflexion des Laserstrahls in Abhängigkeit von einer Eindringtiefe D des Laserstrahl in den Komplex von Kleinobjekten auslesbar ist; und
- eine Verrauschungsroutine, die ausgestaltet ist, einen Einfallswinkel
θ des Laserstrahls auf einer Oberfläche (10) des 3D-Modells zu ermitteln, aus der Vielzahl von Intensitätsverteilungen (2) eine dem ermittelten Einfallswinkel θ zugeordnete Intensitätsverteilung (2) auszuwählen und
unter Berücksichtigung des euklidischen Abstands und der ausgewählten Intensitätsverteilung (2) eine verrauschte Entfernungsmessung zu berechnen; wobei die Sensorsimulation ausgestaltet ist, in dem Fall, dass der Auftreffpunkt (16) des Laserstrahls auf einer Oberfläche des 3D-Modells (5) liegt, die Verrauschungsroutine aufzurufen, um eine Vielzahl von Reflexionen (16) des Laserstrahls an einer Vielzahl von Kleinobjekten (8) zu simulieren.

2. Vorrichtung gemäß Anspruch 1, wobei der Komplex von Kleinobjekten (8) ein Vegetationselement ist, insbesondere ein Komplex von Ähren, d.h. ein Getreidefeld, ein Komplex von Gräsern, d.h. eine Wiese, oder ein Komplex von Blättern, d.h. eine belaubte Pflanze, ein Gebüsch oder ein Nadelbaum.

3. Vorrichtung gemäß Anspruch 1 oder 2, wobei die Kleinobjekte (8) von ähnlicher oder geringerer Größenordnung als der Strahldurchmesser des Laserstrahls sind, sodass der Laserstrahl in den Komplex von Kleinobjekten (8) eindringt und durch Reflexion an einer Vielzahl von Kleinobjekten (8) mit zunehmender Eindringtiefe D an Intensität verliert.

4. Vorrichtung gemäß einem der vorhergehenden Ansprüche, wobei das 3D-Modell (5) des Komplexes keine Modellierung einzelner Kleinobjekte (8) umfasst.

5. Vorrichtung gemäß Anspruch 4, wobei das 3D-Modell (5) eine den Komplex einhüllende Oberfläche (10) ist.

6. Vorrichtung gemäß Anspruch 1, wobei jede Intensitätsverteilung (2) unterschiedlichen Eindringtiefen (D) jeweils eine Größe zuordnet, die charakteristisch für eine Anzahl von Reflexionen ist, wobei jede Anzahl von Reflexionen einer Anzahl von Auftreffpunkten (16) eines hochaufgelösten simulierten Laserstrahls, der durch eine Vielzahl von Strahlen (12) modelliert ist, in einem feingranularen 3D-Modell (6) des Komplexes, das einzelne Kleinobjekte (8) auflöst, entspricht.

7. Vorrichtung gemäß Anspruch 6, deren Sensorsimulation ausgestaltet ist, den Intensitätsanteil unter Berücksichtigung der Anzahl von Auftreffpunkten (16) zu ermitteln.

8. Vorrichtung gemäß Anspruch 2, wobei jede Intensitätsverteilung (2) neben dem Einfallswinkel θ mindestens einem weiteren Parameter zugeordnet ist und die Verrauschungsroutine ausgestaltet ist, aus der Vielzahl von Intensitätsverteilungen eine dem ermittelten Einfallswinkel θ und dem mindestens einen weiteren Parameter zugeordnete Intensitätsverteilung (2) auszuwählen,
wobei insbesondere der mindestens eine weitere Parameter einer der folgenden Parameter ist: Art der Vegetation, Aufweitungswinkel des Laserstrahls, Pflanzdichte, Reihenabstand, Höhe der Vegetation, Reifegrad.

9. Vorrichtung gemäß einem der vorhergehenden Ansprüche, deren Sensorsimulation ausgestaltet ist, synthetische Sensorsignale des Sensors zu erzeugen, um einem unter Test stehenden Steuersystem zur Auswertung der Sensorsignale, insbesondere einem LIDAR-System (Light Detection and Ranging), die Anwesenheit eines Sensors vorzutäuschen

10. Verfahren zur Echtzeitsimulation einer Laserstrahlabtastung eines Komplexes von Kleinobjekten (8), umfassend die Verfahrensschritte:
Durchführung einer Sensorsimulation eines Sensors zur Abstandsmessung mittels eines Laserstrahls in einer virtuellen Umgebung, die ein monolithisches 3D-Modell (5) des Komplexes von Kleinobjekten (8) umfasst, mittels einer Raycasting-Routine, die eingerichtet ist, einen Auftreffpunkt (16) eines von dem Sensor (4) ausgehenden Laserstrahls mit einer Oberfläche in der virtuellen Umgebung zu berechnen und basierend auf einer Ermittlung eines euklidischen Abstands des Sensors (4) vom Auftreffpunkt (16) eine von dem Sensor (4) durchgeführte Entfernungsmessung zu simulieren;
Ermittlung eines Einfallswinkels θ des Laserstrahls auf einer Oberfläche (10) des 3D-Modells (5);
Auswahl einer dem Einfallswinkel θ zugeordneten Intensitätsverteilung (2) aus einer Datenbank (20), die eine Vielzahl von Intensitätsverteilungen (2) umfasst, wobei jede Intensitätsverteilung (2) aus der Vielzahl von Intensitätsverteilungen (2) einem Einfallswinkel θ des Laserstrahls zugeordnet ist und aus jeder Intensitätsverteilung (2) aus der Vielzahl von Intensitätsverteilungen (2) ein Intensitätsanteil einer Reflexion des Laserstrahls in Abhängigkeit von einer Eindringtiefe (D) des Laserstrahls in den Komplex von Kleinobjekten (8) auslesbar ist;
Berechnung einer verrauschten Entfernungsmessung unter Berücksichtigung des euklidischen Abstands und der ausgewählten Intensitätsverteilung (2), um eine Vielzahl von Reflexionen (16) des Laserstrahls an einer Vielzahl von Kleinobjekten (8) zu simulieren.

11. Verfahren gemäß Anspruch 10, mit den Verfahrensschritten:
Berechnung synthetischer Sensorsignale des Sensors (4) anhand der verrauschten Entfernungsmessung;
Einspeisung der synthetischen Sensorsignale in ein unter Test stehendes Steuersystem zur Auswertung der Sensorsignale, insbesondere ein LIDAR-System (Light Detection and and Ranging).

12. Verfahren gemäß Anspruch 10 oder 11, mit den Verfahrensschritten:
Bereitstellung eines einzelne Kleinobjekte auflösenden feingranularen 3D-Modells (6) des Komplexes von Kleinobjekten (8) in der virtuellen Umgebung;
Wiederholte Berechnung der Auftreffpunkte (16) einer Vielzahl von Strahlen (12) auf Oberflächen von Kleinobjekten (8) in dem feingranularen 3D-Modell (6), wobei die Vielzahl von Strahlen (12) in ihrer Gesamtheit einen aufgefächerten Laserstrahl mit einem ausgedehnten Strahldurchmesser simulieren, für eine Vielzahl von Einfallswinkeln θ;
Erstellung der Intensitätsverteilungen (2) durch Zählung der Auftreffpunkte (16) in Abhängigkeit der Eindringtiefe der Strahlen in das feingranulare 3D-Modell (6).

## Geänderte Patentansprüche

### Geänderte Patentansprüche gemäss Regel 137(2) EPÜ.

1. Vorrichtung zur Echtzeitsimulation einer Laserstrahlabtastung eines Komplexes von Kleinobjekten (8),
mit einer virtuellen Umgebung, die ein monolithisches, keine Modellierung einzelner Kleinobjekte umfassendes 3D-Modell (5) des Komplexes umfasst;
mit einer Sensorsimulation, ausgestaltet zur Simulation eines Sensors zur Abstandsmessung mittels eines Laserstrahls, die Sensorsimulation umfassend:
- eine Raycasting-Routine, die eingerichtet ist, einen Auftreffpunkt (16) eines von dem Sensor ausgehenden Laserstrahls auf einer Oberfläche in der virtuellen Umgebung zu berechnen und basierend auf einer Ermittlung eines euklidischen Abstands des Sensors vom Auftreffpunkt eine von dem Sensor durchgeführte Entfernungsmessung zu simulieren;
- eine Datenbank (20), umfassend eine Vielzahl von Intensitätsverteilungen (2), wobei jede Intensitätsverteilung (2) aus der Vielzahl von Intensitätsverteilungen (2) einem Einfallswinkel θ des Laserstrahls zugeordnet ist und aus jeder Intensitätsverteilung (2) aus der Vielzahl von Intensitätsverteilungen (2) ein Intensitätsanteil einer Reflexion des Laserstrahls in Abhängigkeit von einer Eindringtiefe D des Laserstrahl in den Komplex von Kleinobjekten auslesbar ist; und
- eine Verrauschungsroutine, die ausgestaltet ist, einen Einfallswinkel θ des Laserstrahls auf einer Oberfläche (10) des 3D-Modells zu ermitteln, aus der Vielzahl von Intensitätsverteilungen (2) eine dem ermittelten Einfallswinkel θ zugeordnete Intensitätsverteilung (2) auszuwählen und
unter Berücksichtigung des euklidischen Abstands und der ausgewählten Intensitätsverteilung (2) eine verrauschte Entfernungsmessung zu berechnen; wobei die Sensorsimulation ausgestaltet ist, in dem Fall, dass der Auftreffpunkt (16) des Laserstrahls auf einer Oberfläche des 3D-Modells (5) liegt, die Verrauschungsroutine aufzurufen, um eine Vielzahl von Reflexionen (16) des Laserstrahls an einer Vielzahl von Kleinobjekten (8) zu simulieren.

2. Vorrichtung gemäß Anspruch 1, wobei der Komplex von Kleinobjekten (8) ein Vegetationselement ist, insbesondere ein Komplex von Ähren, d.h. ein Getreidefeld, ein Komplex von Gräsern, d.h. eine Wiese, oder ein Komplex von Blättern, d.h. eine belaubte Pflanze, ein Gebüsch oder ein Nadelbaum.

3. Vorrichtung gemäß Anspruch 1 oder 2, wobei die Kleinobjekte (8) von ähnlicher oder geringerer Größenordnung als der Strahldurchmesser des Laserstrahls sind, sodass der Laserstrahl in den Komplex von Kleinobjekten (8) eindringt und durch Reflexion an einer Vielzahl von Kleinobjekten (8) mit zunehmender Eindringtiefe D an Intensität verliert.

4. Vorrichtung gemäß Anspruch 1, wobei das 3D-Modell (5) eine den Komplex einhüllende Oberfläche (10) ist.

5. Vorrichtung gemäß Anspruch 1, wobei jede Intensitätsverteilung (2) unterschiedlichen Eindringtiefen (D) jeweils eine Größe zuordnet, die charakteristisch für eine Anzahl von Reflexionen ist, wobei jede Anzahl von Reflexionen einer Anzahl von Auftreffpunkten (16) eines hochaufgelösten simulierten Laserstrahls, der durch eine Vielzahl von Strahlen (12) modelliert ist, in einem feingranularen 3D-Modell (6) des Komplexes, das einzelne Kleinobjekte (8) auflöst, entspricht.

6. Vorrichtung gemäß Anspruch 5, deren Sensorsimulation ausgestaltet ist, den Intensitätsanteil unter Berücksichtigung der Anzahl von Auftreffpunkten (16) zu ermitteln.

7. Vorrichtung gemäß Anspruch 2, wobei jede Intensitätsverteilung (2) neben dem Einfallswinkel θ mindestens einem weiteren Parameter zugeordnet ist und die Verrauschungsroutine ausgestaltet ist, aus der Vielzahl von Intensitätsverteilungen eine dem ermittelten Einfallswinkel θ und dem mindestens einen weiteren Parameter zugeordnete Intensitätsverteilung (2) auszuwählen,
wobei insbesondere der mindestens eine weitere Parameter einer der folgenden Parameter ist: Art der Vegetation, Aufweitungswinkel des Laserstrahls, Pflanzdichte, Reihenabstand, Höhe der Vegetation, Reifegrad.

8. Vorrichtung gemäß einem der vorhergehenden Ansprüche, deren Sensorsimulation ausgestaltet ist, synthetische Sensorsignale des Sensors zu erzeugen, um einem unter Test stehenden Steuersystem zur Auswertung der Sensorsignale, insbesondere einem LIDAR-System (Light Detection and Ranging), die Anwesenheit eines Sensors vorzutäuschen

9. Verfahren zur Echtzeitsimulation einer Laserstrahlabtastung eines Komplexes von Kleinobjekten (8), umfassend die Verfahrensschritte:
Durchführung einer Sensorsimulation eines Sensors zur Abstandsmessung mittels eines Laserstrahls in einer virtuellen Umgebung, die ein monolithisches, keine Modellierung einzelner Kleinobjekte umfassendes 3D-Modell (5) des Komplexes umfasst, mittels einer Raycasting-Routine, die eingerichtet ist, einen Auftreffpunkt (16) eines von dem Sensor (4) ausgehenden Laserstrahls mit einer Oberfläche in der virtuellen Umgebung zu berechnen und basierend auf einer Ermittlung eines euklidischen Abstands des Sensors (4) vom Auftreffpunkt (16) eine von dem Sensor (4) durchgeführte Entfernungsmessung zu simulieren;
Ermittlung eines Einfallswinkels θ des Laserstrahls auf einer Oberfläche (10) des 3D-Modells (5);
Auswahl einer dem Einfallswinkel θ zugeordneten Intensitätsverteilung (2) aus einer Datenbank (20), die eine Vielzahl von Intensitätsverteilungen (2) umfasst, wobei jede Intensitätsverteilung (2) aus der Vielzahl von Intensitätsverteilungen (2) einem Einfallswinkel θ des Laserstrahls zugeordnet ist und aus jeder Intensitätsverteilung (2) aus der Vielzahl von Intensitätsverteilungen (2) ein Intensitätsanteil einer Reflexion des Laserstrahls in Abhängigkeit von einer Eindringtiefe (D) des Laserstrahls in den Komplex von Kleinobjekten (8) auslesbar ist;
Berechnung einer verrauschten Entfernungsmessung unter Berücksichtigung des euklidischen Abstands und der ausgewählten Intensitätsverteilung (2), um eine Vielzahl von Reflexionen (16) des Laserstrahls an einer Vielzahl von Kleinobjekten (8) zu simulieren.

10. Verfahren gemäß Anspruch 9, mit den Verfahrensschritten:
Berechnung synthetischer Sensorsignale des Sensors (4) anhand der verrauschten Entfernungsmessung;
Einspeisung der synthetischen Sensorsignale in ein unter Test stehendes Steuersystem zur Auswertung der Sensorsignale, insbesondere ein LIDAR-System (Light Detection and and Ranging).

11. Verfahren gemäß Anspruch 9 oder 10, mit den Verfahrensschritten:
Bereitstellung eines einzelne Kleinobjekte auflösenden feingranularen 3D-Modells (6) des Komplexes von Kleinobjekten (8) in der virtuellen Umgebung;
Wiederholte Berechnung der Auftreffpunkte (16) einer Vielzahl von Strahlen (12) auf Oberflächen von Kleinobjekten (8) in dem feingranularen 3D-Modell (6), wobei die Vielzahl von Strahlen (12) in ihrer Gesamtheit einen aufgefächerten Laserstrahl mit einem ausgedehnten Strahldurchmesser simulieren, für eine Vielzahl von Einfallswinkeln θ;
Erstellung der Intensitätsverteilungen (2) durch Zählung der Auftreffpunkte (16) in Abhängigkeit der Eindringtiefe der Strahlen in das feingranulare 3D-Modell (6).
